# EUROPEAN PATENT SPECIFICATION

(11) **EP 2 578 880 B1**
(45) Date of publication and mention of the grant of the patent: **07.08.2019**
(21) Application number: 11792134.6
(22) Date of filing: 06.06.2011
(51) Int. Cl.: F04B 39/02, C09K 5/04, F04B 39/06, F04B 39/12, F04C 29/02, F25B 1/00, F25B 1/04, F04C 29/04

(54) **AIR CONDITIONER**
KLIMAANLAGE
CLIMATISEUR

(30) Priority: 07.06.2010 JP 2010129744
(43) Date of publication of application: 10.04.2013
(73) Proprietor: Panasonic Corporation, Kadoma-shi Osaka 571-8501 (JP)
(72) Inventor: OHNO, Ryuichi, 2-1-61, Shiromi, Chuo-ku, Osaka 540-6207 (JP); OYAGI, Shingo, 2-1-61, Shiromi, Chuo-ku, Osaka 540-6207 (JP); NAKAI, Hiroaki, 2-1-61, Shiromi, Chuo-ku, Osaka 540-6207 (JP); KARINO, Tsuyoshi, 2-1-61, Shiromi, Chuo-ku, Osaka 540-6207 (JP); YOSHIDA, Hirofumi, 2-1-61, Shiromi, Chuo-ku, Osaka 540-6207 (JP); IIDA, Noboru, 2-1-61, Shiromi, Chuo-ku, Osaka 540-6207 (JP)
(74) Representative: Eisenführ Speiser
(86) International application number: PCT/JP2011/003183
(87) International publication number: WO 2011/155175

(56) References cited:
- EP-A2- 2 136 083
- JP-A- 10 148 405
- JP-A- H10 148 405
- JP-A- 2000 130 865
- JP-A- 2009 298 927
- JP-A- 2009 300 022
- JP-A- 2010 001 775
- JP-A- 2010 101 530
- US-A1- 2005 175 492

## Description

### TECHNICAL FIELD

The present invention relates to an air conditioner comprising a hermetic compressor for use in air-conditioning equipment for home use or business use.

### BACKGROUND ART

A conventional air conditioner of this kind comprises a hermetic compressor using an HFC refrigerant having a zero-ozone depletion potential (ODP), but the HFC refrigerant is problematic in having a large global warming potential (GWP). In order to solve this problem, the use of a refrigerant mainly comprises hydrofluoroolefin containing no chlorine atoms, having a small global warming potential, and also having a carbon-carbon double bond has been proposed (see, for example, Patent Document 1).

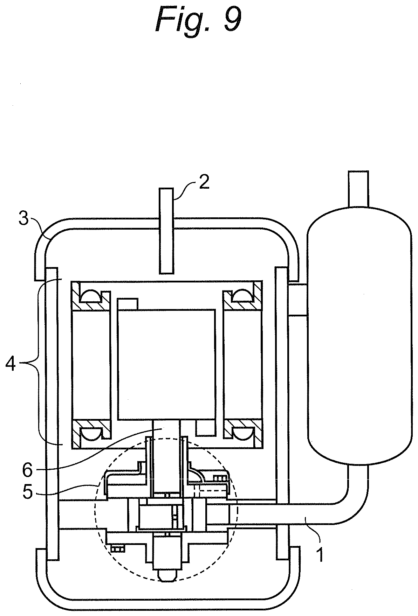

Fig. 9 is a vertical sectional view of the conventional hermetic compressor as disclosed in Patent Document 1. This compressor includes a closed container 3 having a suction port 1 and a discharge port 2 both defined therein. An electric motor 4 and a compression mechanism 5 are accommodated within the closed container 3 and connected to each other by a shaft 6. Operation of the electric motor 4 rotates the shaft 6, which in turn causes the compression mechanism 5 to compress a low-pressure refrigerant inhaled through the suction port 1. As a result, the low-pressure refrigerant turns into a high-pressure refrigerant, which is discharged outside the closed container 3 through the discharge port 2.

Because hydrofluoroolefin having a carbon-carbon double bond has a comparatively large theoretical coefficient of cooling performance (COP), the use of hydrofluoroolefin results in a highly-efficient compressor that is good for the global environment.

Patent Document 2 discloses a refrigerating/air-conditioning equipment having a refrigerating cycle in which a compressor, a non-application side heat exchanger, a pressure reducing device and an application side heat exchanger are connected sequentially, wherein a heater is provided in the compressor to heat it, a temperature sensor to detect the temperature of the compressor and a delivered gas condensing temperature sensor to detect the condensing temperature of a delivered gas from the compressor. The heater is controlled by a control means based on temperatures detected of the temperature sensor and the delivered gas condensing temperature sensor. Thus, the temperature of a lubricant after the starting in the compressor is kept higher than that of the delivered gas condensing temperature thereby preventing the mixing of a refrigerant into the lubricant in the compressor.

Patent Document 3 discloses a high pressure chamber in a casing which communicates at the bottom thereof with a liquid retainer. A communication pipe is connected at one end thereof to the upper end of the liquid retainer and connected at the other end thereof to an intake pipe. A gas container and first and second solenoid valves are provided in the communication pipe. When the first solenoid valve is closed and the second solenoid valve is opened, the gas container communicates with the intake pipe to reduce the pressure in the gas container. Thereafter, when the first solenoid valve is opened and the second solenoid valve is closed, the gas container communicates with the liquid retainer to reduce the pressure in the liquid retainer. Then, the pressure of lubricant oil in the liquid retainer is lowered to gasify a refrigerant dissolving in the lubricant oil. As a result, lubrication malfunction caused due to lowering of the viscosity of the lubricant oil by dissolution of the refrigerant therein is avoided and the reliability of the hermetic compressor is enhanced.

Patent Document 4 discloses a pipe passing high temperature refrigerant gas of sufficient length for ensuring sufficient heat transmission is wound spirally around the enclosed vessel of a compressor tightly to the outer wall face thereof as means for heating the wall face in the vicinity of an oil sump above a baffle plate. Since the outer wall face of the enclosed vessel is heated by high temperature refrigerant gas delivered from the compressor, the refrigerant gas is not condensed on the inner wall face of the enclosed vessel and an oil of appropriate viscosity is obtained while being separated from the refrigerant. Since an electric heater, or the like, for preheating the enclosed vessel of compressor is not required, power consumption can be reduced while reducing the cost through reduction of the number of part items.

Patent Document 5 discloses a rotary compressor for compressing the refrigerant which includes a halogenated hydrocarbon having carbon-carbon double bond within its composition, a hydrocarbon having carbon-carbon double bond within its composition, and a mixture including at least one of the halogenated hydrocarbon having carbon-carbon double bond within its composition and the hydrocarbon having carbon- carbon double bond within its composition, at least one of the components configuring the sliding portion installed to a compressing element for compressing the refrigerant is constructed of a non-metal at least at its sliding surface.

### Patent Document(s)

Patent Document 1: JP 2009-222006 A
Patent Document 2: JP H10-148405 A
Patent Document 3: US 2005/175492 A1
Patent Document 4: JP 2000-130865 A
Patent Document 5: EP 2 136 083 A2

### SUMMARY OF INVENTION

### Problems to be solved by the Invention

However, in applications where a refrigerant mainly comprises hydrofluoroolefin having a carbon-carbon double bond is used as a fluid, a viscosity of lubricating oil contained in the compressor tends to reduce because such a refrigerant blends easily into the lubricating oil compared with, for example, HFC410A that is a generally-used typical HFC refrigerant. For this reason, the compressor is supplied with low-viscosity lubricating oil, thus posing a problem that the compressor is reduced in reliability due to poor lubrication,

The present invention has been developed to overcome the above-described disadvantage. It is accordingly an objective of the present invention to provide an air conditioner comprising a hermetic compressor capable of maintaining the reliability thereof even if a refrigerant mainly comprises hydrofluoroolefin having a carbon-carbon double bond is used as a fluid.

### Means to Solve the Problems

In accomplishing the above objective, the present invention is directed to an air conditioner according to claim 1, comprising a hermetic compressor that includes a closed container having a suction port and a discharge port both defined therein, a compression mechanism for compressing a refrigerant inhaled through the suction port, a high-pressure chamber for communicating the compression mechanism with the discharge port, a lubricating oil sump disposed at a bottom portion of the high-pressure chamber, and a lubricating oil supply means for supplying lubricating oil from the lubricating oil sump to the compression mechanism. A single-component refrigerant mainly comprising hydrofluoroolefin having a carbon-carbon double bond or a mixture refrigerant containing this refrigerant is used as a fluid. A heat source is provided to heat the lubricating oil.

This construction can maintain a temperature of the lubricating oil and restrain the refrigerant from blending into the lubricating oil, thus making it possible to prevent the compression mechanism from reducing in reliability.

### Effects of the Invention

Even if a refrigerant mainly comprising hydrofluoroolefin having a carbon-carbon double bond is used, the hermetic compressor according to the present invention can positively avoid poor lubrication that is caused by a reduction in viscosity of the lubricating oil. Accordingly, a highly-reliable hermetic compressor that is good for the global environment can be provided.

### BRIEF DESCRIPTION OF THE DRAWINGS

Fig. 1 is a vertical sectional view of a hermetic compressor according to a first embodiment of the present invention.
Fig. 2 is a cycle diagram of an air conditioner employing the hermetic compressor according to the first embodiment of the present invention.
Fig. 3 is a vertical sectional view of a hermetic compressor according to a second embodiment of the present invention.
Fig. 4 is a vertical sectional view of a hermetic compressor according to a third embodiment of the present invention.
Fig. 5 is a graph indicating a relationship among a temperature of lubricating oil, a pressure of a refrigerant, and solubility of the refrigerant in the third embodiment of the present invention.
Fig. 6 is a graph indicating a relationship among the temperature of the lubricating oil, a viscosity of the lubricating oil, and the solubility of the refrigerant in the third embodiment of the present invention.
Fig. 7 is a vertical sectional view of a hermetic compressor according to a fourth embodiment of the present invention.
Fig. 8 is a vertical sectional view of another hermetic compressor according to the fourth embodiment of the present invention.
Fig. 9 is a vertical sectional view of a conventional hermetic compressor.

### DESCRIPTION OF EMBODIMENTS

The present invention according to claim 1 is directed to an air conditioner for use with a single-component refrigerant mainly comprising hydrofluoroolefin having a carbon-carbon double bond or a mixture refrigerant containing this refrigerant is used as a fluid, the air conditioner comprising an hermetic compressor, a condenser, a pressure-reducing device and
an evaporator, all connected in series by refrigerant piping to define a refrigerating cycle. The hermetic compressor further comprises a closed container having a suction port and a discharge port both defined therein, a compression mechanism operable to compress a refrigerant inhaled through the suction port, a high-pressure chamber operable to communicate the compression mechanism with the discharge port, a lubricating oil sump disposed at a bottom portion of the high-pressure chamber, a lubricating oil supply means operable to supply lubricating oil from the lubricating oil sump to the compression mechanism, and a heat source operable to heat the lubricating oil. The air conditioner further comprises a control device operable to control power supply to the heat source and an inverter circuit operable to drive the hermetic compressor, wherein the hermetic compressor has a variable speed and the control device controls power supply to the heat source based on power consumption or an electric current of the hermetic compressor or an output frequency of an inverter circuit. This feature allows the heat source to be positively supplied with electric power to evaporate the refrigerant, thus making it possible to avoid a reduction in viscosity of the lubricating oil and maintain the reliability of the hermetic compressor high.

This construction can restrain the refrigerant from blending into the lubricating oil, thus making it possible to prevent the compression mechanism from reducing in reliability.

In the present invention according to claim 2, the heat source as recited in claim 1 is mounted on an outer surface of the closed container. This feature allows the heat source to be easily installed without any complicated mechanism and can maintain the temperature of the lubricating oil and restrain the refrigerant from blending into the lubricating oil.

In the present invention according to claim 3, the heat source as recited in claim 1 is mounted within the closed container. This feature can directly heat the lubricating oil within the closed container and control the temperature of the lubricating oil at a location close to a lubricating oil supply means that supplies the compression mechanism with the lubricating oil. Accordingly, a reduction in temperature of the lubricating oil is avoided and the viscosity of the lubricating oil is accordingly maintained appropriately, thus making it possible to enhance the reliability.

In the present invention according to claim 4, the heat source as recited in any one of claims 1 to 3 includes an electric heater. This feature allows the heat source to be easily installed and can easily control the temperature. Accordingly, the temperature of the lubricating oil can be stabilized and the viscosity of the lubricating oil can be appropriately maintained.

In the present invention according to claim 5, the heat source as recited in any one of claims 1 to 3 includes an electromagnetic induction heating device. Because this feature can easily control the temperature, the temperature of the lubricating oil can be stabilized and the viscosity of the lubricating oil can be appropriately maintained.

In the present invention according to claim 6, the heat source as recited in any one of claims 1 to 5 is controlled by a lubricating oil temperature measuring means for detecting the temperature of the lubricating oil and a discharge pressure measuring means for detecting the pressure of a fluid discharged from the discharge port. This feature controls the temperature and the pressure to effectively activate the heat source, thereby making it possible to avoid a reduction in temperature of the lubricating oil and appropriately maintain the viscosity of the lubricating oil.

In the present invention according to claim 7, a heat-retaining means is disposed around the hermetic compressor as recited in any one of claims 1 to 6 to retain heat of the hermetic compressor. This feature can maintain the temperature of the closed container, which becomes high during operation, thus making it possible to avoid a reduction in temperature of the lubricating oil within the closed container and restrain the refrigerant from blending into the lubricating oil.

In the present invention according to claim 8, the air conditioner according to any one of claims 1 to 7 further includes a compressor temperature measuring means for detecting a temperature of the hermetic compressor and a condensation temperature measuring means for detecting a condensation temperature of the air conditioner. According to this feature, if the temperature of the hermetic compressor or that of the lubricating oil is lower than the condensation temperature during operation of the air conditioner, the control device controls power supply to the heat source to thereby evaporate the refrigerant that has condensed within the closed container, thus making it possible to avoid a reduction in viscosity of the lubricating oil and maintain the reliability of the hermetic compressor high.

In the present invention according to claim 9, when a defrosting operation for melting frost adhering to an outdoor heat exchanger is conducted during heating operation of the air conditioner as recited in any one of claims 1 to 8 or 9, the control device controls power supply to the heat source. This feature allows the defrosting operation to be completed within a short period of time, thus making it possible to reduce a reduction in room temperature, which is caused by a reduction in heating performance during defrosting, and enhance comfort.

In the present invention according to claim 10, the working fluid for use in the air conditioner according to any one of claims 1 to 9 is a refrigerant mainly comprising hydrofluoroolefin having a carbon-carbon double bond and mixed with hydrofluorocarbon having no double bonds. This feature can effectively provide a highly-reliable and highly efficient hermetic compressor.

In the present invention according to claim 11, the working fluid for use in the air conditioner according to any one of claims 1 to 9 is a mixture refrigerant comprising tetrafluoropropene or trifluoropropene as a hydrofluoroolefin and difluoromethane as a hydrofluorocarbon. This feature can restrain the speed, thus making it possible to effectively provide a highly-reliable and highly efficient hermetic compressor.

In the present invention according to claim 12, the working fluid for use in the air conditioner according to any one of claims 1 to 9 is a mixture refrigerant comprising tetrafluoropropene or trifluoropropene as a hydrofluoroolefin and pentafluoroethane as a hydrofluorocarbon. This feature can maintain the discharge temperature low, thus making it possible to effectively provide a highly-reliable and highly efficient hermetic compressor.

Embodiments of the present invention are described hereinafter with reference to the drawings, but the present invention is not limited to the embodiments.

### (Embodiment 1)

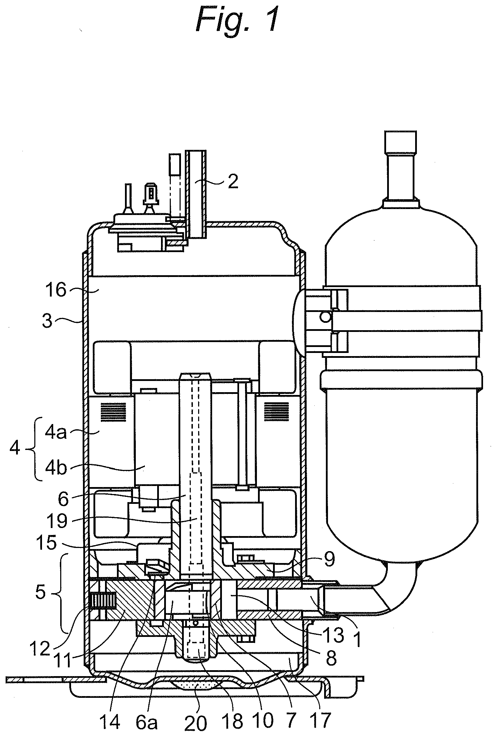

Fig. 1 is a vertical sectional view of a hermetic compressor according to a first embodiment of the present invention. In Fig. 1, the same component parts as those in the conventional hermetic compressor of Fig. 9 are designated by the same reference numerals and explanation thereof is omitted.

A closed container 3 accommodates therein an electric motor 4 and a compression mechanism 5 driven by the electric motor 4.

The electric motor 4 includes a stator 4a fixed to the closed container 3 and a rotor 4b fixed to an upper portion of a crankshaft 6.

The compression mechanism 5 is of a rotary type and includes the crankshaft 6, a rolling piston 7 mounted on a crankpin 6a of the crankshaft 6, a cylinder 8 fixed to the closed container 3, an upper bearing 9 for closing an upper opening of the cylinder 8, a lower bearing 10 for closing a lower opening of the cylinder 8, a vane 11 smoothly inserted into a slot (not shown) defined in the cylinder 8 for a reciprocating motion thereof along the slot, a spring 12 disposed behind the vane 11 to bias the vane 11, and the like.

The rolling piston 7 is accommodated within the cylinder 8 closed by the upper bearing 9 and the lower bearing 10. The vane 11 has a distal end held in contact with an outer peripheral surface of the rolling piston 7 to form a suction chamber 13 on one side of the vane 11 and a compression chamber (not shown) on the other side of the vane 11.

The crankshaft 6 is journaled in the upper bearing 9 and the lower bearing 10. When the crankshaft 6 is rotated by the electric motor 4, the rolling piston 7 rotates eccentrically within the cylinder 8, thereby inhaling a gas into the suction chamber 13 through the suction port 1 and compressing a gas inside the compression chamber (not shown).

The compressed gas passes through a discharge port 14 defined in the upper bearing 9, lifts a discharge valve (not shown), and then enters a discharge muffler chamber delimited by the upper bearing 9 and a muffler 15 for covering an upper surface of the upper bearing 9. Thereafter, the compressed gas passes through a hole (not shown) defined in the muffler 15, passes above the electric motor 4 from below the electric motor 4, and is finally discharged outside through a high-pressure chamber 16 in the closed container 3 and through a discharge port 2.

Lubricating oil is stored in a lubricating oil sump 17 formed at a bottom portion in the closed container 3 and sucked by an oil pump 18 incorporated in the crankshaft 6. The sucked lubricating oil passes through an oil supply channel 19 defined in the crankshaft 6 and is supplied to sliding surfaces between the crankshaft 6 and the upper bearing 9, those between the crankshaft 6 and the lower bearing 9, those between the crankpin 6a and the rolling piston 7, those between the rolling piston 7 and the cylinder 8, and the like.

The vane 11 and a lower portion of the slot are submerged in and supplied with the lubricating oil. The lubricating oil supplied to the sliding surfaces between the rolling piston 7 and the cylinder 8 and lubricating oil contained in the gas that has been inhaled through the suction port are supplied to an inner peripheral surface of the cylinder 8, the outer peripheral surface of the rolling piston 7, and the distal end, side surfaces or upper and lower surfaces of the vane 11.

In this hermetic compressor, a heater 20 is mounted on an outer surface of a bottom wall of the closed container 3 to heat the lubricating oil stored in the lubricating oil sump 17.

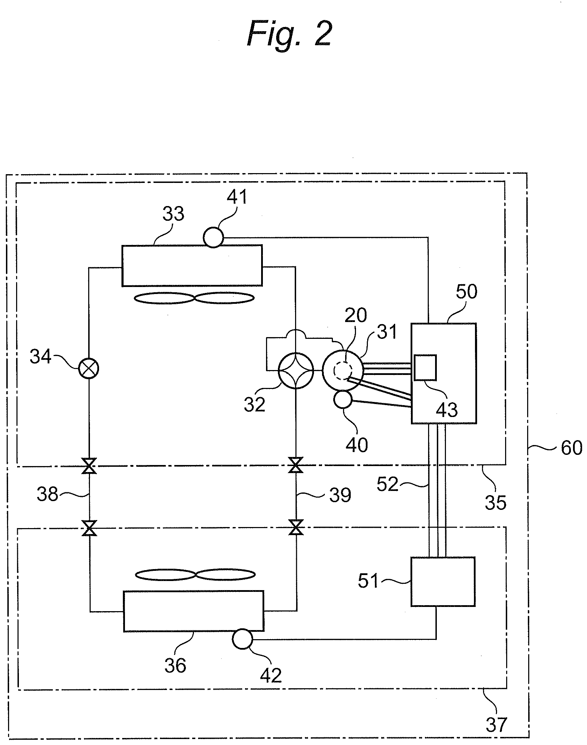

Fig. 2 is a cycle diagram of an air conditioner employing the hermetic compressor according to the first embodiment of the present invention.

An outdoor unit 35 includes a hermetic compressor 31 having a variable speed, a four-way valve 32 for switching between a refrigerant circuit in a cooling operation and that in a heating operation, an outdoor heat exchanger 33 for exchanging heat between a refrigerant and outdoor air, and a pressure-reducing device 34 for reducing a pressure of the refrigerant, all connected via refrigerant piping. An indoor unit 37 includes an indoor heat exchanger 36 for exchanging heat between the refrigerant and indoor air. The outdoor unit 35 and the indoor unit 37 are connected to each other by a liquid refrigerant pipe 38 and a gas refrigerant pipe 39 so as to form a loop, thereby constructing an air conditioner 60.

Also, the outdoor unit 35 is provided with a compressor temperature sensor 40 for detecting a temperature of the hermetic compressor 31, an outdoor refrigerant temperature sensor 41 for detecting a temperature of the refrigerant in the outdoor heat exchanger 33, and an operating current sensor 43 for detecting an operating current of the hermetic compressor 31. On the other hand, the indoor unit 37 is provided with an indoor refrigerant temperature sensor 42 for detecting a temperature of the refrigerant in the indoor heat exchanger 36.

Although not illustrated, the outdoor unit 35 is also provided with an outdoor control board, on which a microcomputer is installed. The microcomputer is an outdoor control device 50 that controls, in accordance with a program set in advance, a speed of the compressor 31, that of a fan, and the like based on, for example, user's instructions, information from various sensors, and set values stored in advance. The outdoor control device 50 also controls power supply to and stop of the heater 20. Also, the outdoor control device 50 communicates with an indoor control device 51, which is similarly a microcomputer installed on an indoor control board mounted in the indoor unit 37, through signal lines 52 for information exchange between the outdoor control device 50 and the indoor control device 51.

Operation and function of the air conditioner of the above-described construction having the hermetic compressor 31 are explained hereinafter.

During cooling, a refrigerant compressed by the compressor 31 turns into a high-temperature and high-pressure refrigerant, which is conveyed to the outdoor heat exchanger 33 through the four-way valve 32. The high-temperature and high-pressure refrigerant radiates heat upon heat exchange with outdoor air and turns into a high-pressure liquid refrigerant, which is conveyed to the pressure-reducing device 34. In the pressure-reducing device 34, the high-pressure liquid refrigerant is reduced in pressure and turns into a low-temperature and low-pressure two-phase refrigerant, which is conveyed to the indoor unit 37 through the liquid refrigerant pipe 38. In the indoor unit 37, the refrigerant enters the indoor heat exchanger 36 to absorb heat upon heat exchange with indoor air, evaporates and turns into a low-temperature gas refrigerant. In this event, the indoor air is cooled to cool an interior of a room. Thereafter, the refrigerant returns to the outdoor unit 35 through the gas refrigerant pipe 39 and then returns to the compressor 31 through the four-way valve 32.

During heating, a refrigerant compressed by the compressor 31 turns into a high-temperature and high-pressure refrigerant, which is conveyed to the indoor unit 37 through the four-way valve 32 and the gas refrigerant pipe 39. The high-temperature and high-pressure refrigerant enters the indoor heat exchanger 36, in which the refrigerant radiates heat upon heat exchange with indoor air and is accordingly cooled, and the cooled refrigerant turns into a high-pressure liquid refrigerant. In this event, the indoor air is heated to heat the interior of the room. Thereafter, the refrigerant is conveyed to the pressure-reducing device 34 through the liquid refrigerant pipe 38. In the pressure-reducing device 34, the high-pressure liquid refrigerant is reduced in pressure and turns into a low-temperature and low-pressure two-phase refrigerant, which is conveyed to the outdoor heat exchanger 33. In the outdoor heat exchanger 33, the low-temperature and low-pressure two-phase refrigerant evaporates upon heat exchange with outdoor air and returns to the compressor 31 through the four-way valve 32.

During cooling or heating, if the refrigerant discharged from the compressor 31 has a sufficiently large superheat and is accordingly stable, only a small amount of refrigerant is soluble in the lubricating oil. Accordingly, a viscosity of the lubricating oil does not become less than 1.0 cP that is a standard viscosity to ensure the reliability.

When an outdoor temperature is low and frost has been formed on the outdoor heat exchanger 33 during heating, a defrosting operation is conducted to melt the frost after a temperature of the outdoor heat exchanger 33 has reduced below a set value. The defrosting operation is initiated by switching the four-way valve 32 and by stopping a fan in the outdoor unit 35 and a fan in the indoor unit 37. During defrosting, a refrigerant compressed by the compressor 31 turns into a high-temperature and high-pressure refrigerant, which is conveyed to the outdoor heat exchanger 33 through the four-way valve 32. The high-temperature and high-pressure refrigerant radiates heat upon heat exchange with outdoor air to melt the frost and turns into a high-pressure liquid refrigerant, which is conveyed to the pressure-reducing device 34. In the pressure-reducing device 34, the high-pressure liquid refrigerant is reduced in pressure and turns into a low-temperature and low-pressure two-phase refrigerant, which is conveyed to the indoor unit 37 through the liquid refrigerant pipe 38. In the indoor unit 37, the refrigerant enters the indoor heat exchanger 36, but does not exchange heat with indoor air because the fan is at a stop. Accordingly, the low-temperature two-phase refrigerant returns to the outdoor unit 35 through the gas refrigerant pipe 39 without any change and then returns to the compressor 31 through the four-way valve 32. When the low-temperature two-phase refrigerant is drawn into the compression mechanism 5, it absorbs heat from the closed container 3, the compression mechanism 5 and the electric motor 4 of the hermetic compressor 31 and turns into a gas refrigerant. That is, a source for absorption of heat in the defrosting operation is heat stored in the closed container 3 and the compression mechanism 5 of the hermetic compressor 31 and an electrical input to the electric motor 4. For this reason, a temperature of the hermetic compressor 31 reduces after the defrosting operation.

Operation and function in a start-up operation after a prolonged stop and those in a heating operation initiated after the defrosting operation are explained hereinafter.

In the start-up operation after a prolonged stop, if much refrigerant blends in the lubricating oil, the viscosity of the lubricating oil reduces. Also, when the defrosting operation has been completed, the temperature of the hermetic compressor 31 becomes low. Accordingly, a refrigerant that has been compressed in the compression chamber and discharged into the closed container 3 of the hermetic compressor 31 through the discharge port 14 condenses within the closed container 3 and is mixed with the lubricating oil in the lubricating oil sump 17 formed at the bottom of the closed container 3. Accordingly, a density of the refrigerant in the lubricating oil increases and the viscosity of the lubricating oil reduces.

At this moment, the hermetic compressor 31 that consumes power (electric power) in the refrigerating cycle of the air conditioner 60 gradually increases its speed after the start-up and power consumption (input) of the hermetic compressor 31 increases with an increase in speed. However, in the case where the temperature of the hermetic compressor 31 is low as in the start-up operation after a prolonged stop or the defrosting operation, a pressure increase of the discharged refrigerant is slow and, accordingly, the power consumption gradually increases. At that time, a detected value of the compressor temperature sensor 40 for detecting the temperature of the hermetic compressor 31 is compared with a detected value of the outdoor refrigerant temperature sensor 41 for detecting the temperature of the refrigerant in the outdoor heat exchanger 33, which acts as a condenser during cooling, or a detected value of the indoor refrigerant temperature sensor 42 for detecting the temperature of the refrigerant in the indoor heat exchanger 36, which acts as a condenser during heating, and until the detected value of the compressor temperature sensor 40 becomes higher a predetermined value than a condensation temperature, i.e., the detected value of the outdoor refrigerant temperature sensor 41 or that of the indoor refrigerant temperature sensor 42, it is determined that the refrigerant discharged into the closed container 3 of the hermetic compressor 31 condenses in the closed container 3.

At the same time, when input (power consumption) of the hermetic compressor 31 is low and, accordingly, the air conditioner 60 has leeway in terms of power consumption, the outdoor control device 50 cooperates with the indoor control device 51 to determine supply power to the heater 20 and positively supply the heater 20 with electric power corresponding to the supply power (input power) based on power consumption of the hermetic compressor 31 so that total power consumption of the air conditioner 60 may not exceed 2000W (may be less than 2000W), i.e., the maximum allowable power consumption. The power consumption of the hermetic compressor 31, which is large and varies with the speed, is obtained from an output value of the operating current sensor 43 for detecting the operating current of the hermetic compressor 31.

As a result, the temperature of the hermetic compressor and that of the lubricating oil can be increased within a short period of time and, hence, the refrigerant that has condensed in the closed container 3 evaporates and the viscosity of the lubricating oil increases quickly. As such, the compression mechanism 5 is supplied with a viscosity-recovered lubricating oil, thus making it possible to prevent the compression mechanism 5 from being reduced in reliability.

### (Embodiment 2)

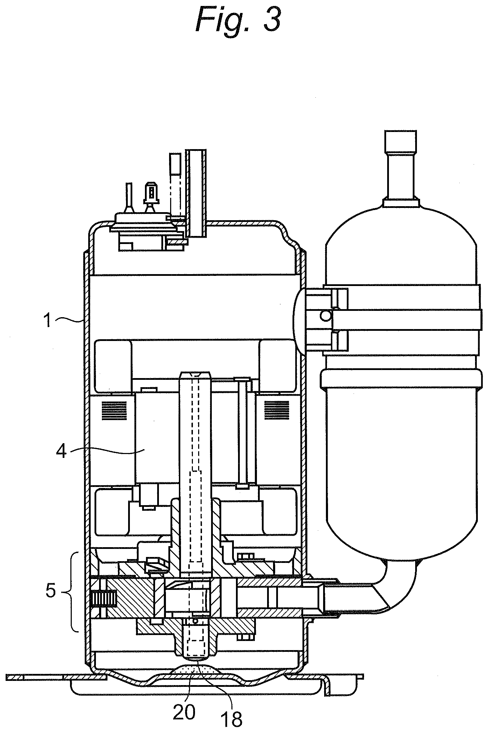

Fig. 3 is a vertical sectional view of a hermetic compressor according to a second embodiment of the present invention. As shown in Fig. 3, a heater 20 is mounted within a closed container 3 to directly heat lubricating oil in the closed container 3. Because a temperature of the lubricating oil can be controlled at a location close to an oil pump 18 that supplies a compression mechanism 5 with the lubricating oil, a reduction in temperature of the lubricating oil can be prevented. Also, a refrigerant that has condensed in the vicinity of the oil pump 18 evaporates and a viscosity of the lubricating oil increases quickly. As such, the compression mechanism 5 is supplied with a viscosity-recovered lubricating oil, thus making it possible to prevent the compression mechanism 5 from being reduced in reliability.

### (Embodiment 3)

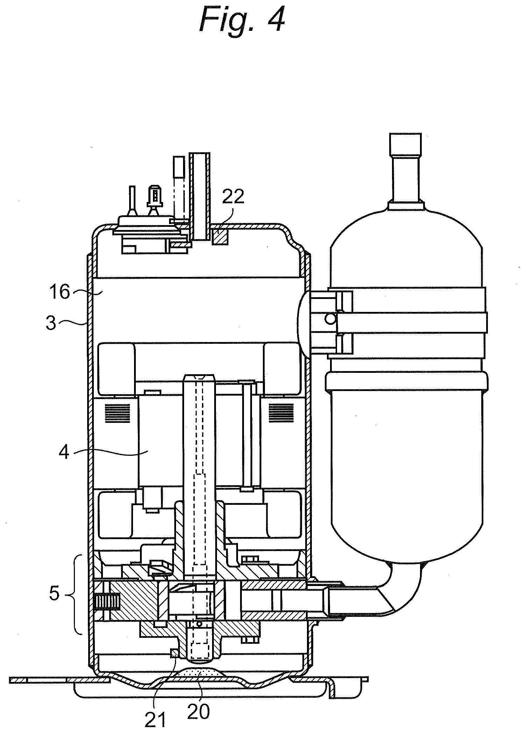

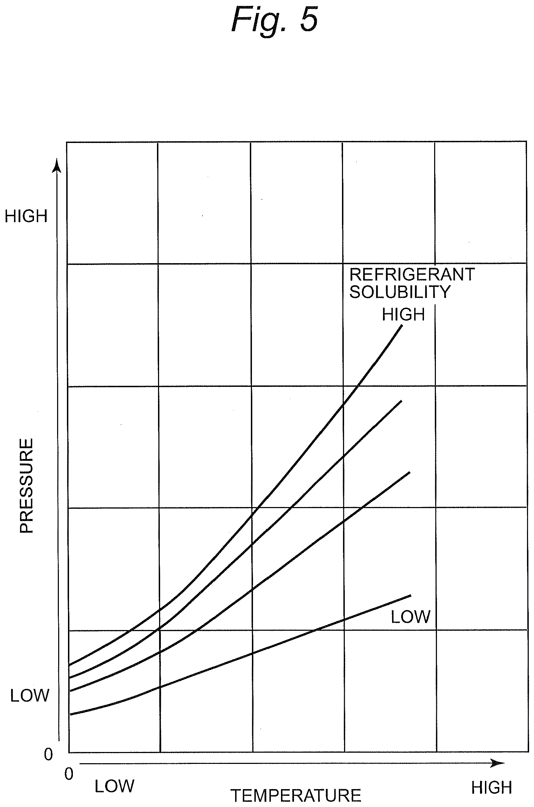

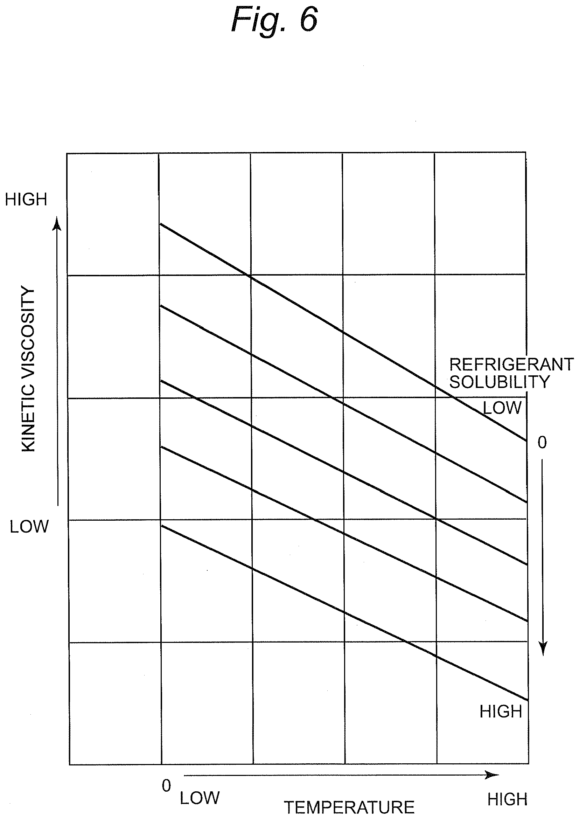

Fig. 4 is a vertical sectional view of a hermetic compressor according to a third embodiment of the present invention and Fig. 5 is a graph indicating a relationship among a temperature of lubricating oil, a pressure of a refrigerant, and solubility of the refrigerant. Fig. 6 is a graph indicating a relationship among the temperature of the lubricating oil, a viscosity of the lubricating oil, and the solubility of the refrigerant.

As shown in Fig. 4, a closed container 3 has a lubricating oil temperature sensor 21 and a pressure sensor 22 both mounted therein. A viscosity of lubricating oil is always appropriately controlled based on a temperature of the lubricating oil obtained from the lubricating oil temperature sensor 21 and a pressure of a gas refrigerant obtained from the pressure sensor 22.

As shown in Fig. 5, if the kind of the lubricating oil and that of the refrigerant are both determined and the temperature and the pressure are both known, the solubility of the refrigerant (that is, refrigerant solubility) in the lubricating oil is unambiguously determined in such a state. Also, as shown in Fig. 6, if the temperature and the refrigerant solubility are both known, a kinetic viscosity of the lubricating oil is unambiguously determined in such a state. That is, if a temperature of lubricating oil stored in a high-pressure chamber 16 and a pressure of a gas refrigerant are both known, the viscosity of the lubricating oil can be estimated by making use of those values, the relationship as shown in Fig. 5, and the relationship as shown in Fig. 6.

As such, an appropriate viscosity of the lubricating oil obtained from the temperature of the lubricating oil and the pressure of the gas refrigerant is set as a standard viscosity in advance, and the viscosity of the lubricating oil obtained from a detected value of the lubricating oil temperature sensor 21 and that of the pressure sensor 22 is compared with the standard viscosity. If the viscosity of the lubricating oil obtained from the detected value of the lubricating oil temperature sensor 21 and that of the pressure sensor 22 is lower than the standard viscosity, it is determined that the appropriate viscosity of the lubricating oil is not maintained and the heater 20 is activated to control the temperature of the lubricating oil. This control is continuously conducted until the viscosity of the lubricating oil obtained from the detected value of the lubricating oil temperature sensor 21 and that of the pressure sensor 22 becomes higher than the standard viscosity, that is, until the viscosity of the lubricating oil is recovered.

Also, a detected value of a compressor temperature sensor 40 for detecting a temperature of a hermetic compressor 31 is compared with a saturation temperature (condensation temperature) of the refrigerant obtained from a detected value of the pressure sensor 22, and until the detected value of the compressor temperature sensor 40 becomes higher a predetermined value or more than the saturation temperature, i.e., the condensation temperature of the refrigerant, it is determined that the refrigerant discharged into the closed container 3 of the hermetic compressor 31 condenses in the closed container 3 and heating by the heater 20 is continued.

In place of the output value of the pressure sensor 22, even if a detected value of an outdoor refrigerant temperature sensor 41 for detecting a refrigerant temperature in an outdoor heat exchanger 33, i.e., a condenser during cooling or a detected value of an indoor refrigerant temperature sensor 42 for detecting a refrigerant temperature in an indoor heat exchanger 36, i.e., a condenser during heating is used, similar effects are produced.

Also, even if the hermetic compressor 31 is at a stop, the viscosity of the lubricating oil may reduce due to blending of the refrigerant therein. If the hermetic compressor 31 is started with the lubricating oil retained low in viscosity, the compression mechanism 5 is damaged due to subsequent poor lubrication. In such a case, the heater 20 is activated before the start of the hermetic compressor 31 to heat the lubricating oil.

This control is continuously conducted until the viscosity of the lubricating oil obtained from the detected value of the lubricating oil temperature sensor 21 and that of the pressure sensor 22 becomes higher than the standard viscosity, that is, until the viscosity of the lubricating oil is recovered.

A result of conventional study reveals that the reliability can be maintained by controlling the viscosity of the lubricating oil so that the standard viscosity may not become less than 1.0 cp.

The reliability can be naturally maintained higher with an increase in the standard viscosity. The standard viscosity can be freely determined depending on an environment in which the hermetic compressor 31 is actually used.

In this way, the heater 20 is effectively activated under the control of the temperature and the pressure, thus making it possible to prevent a reduction in temperature of the lubricating oil and maintain the appropriate viscosity of the lubricating oil that is conveyed to the compression mechanism 5.

### (Embodiment 4)

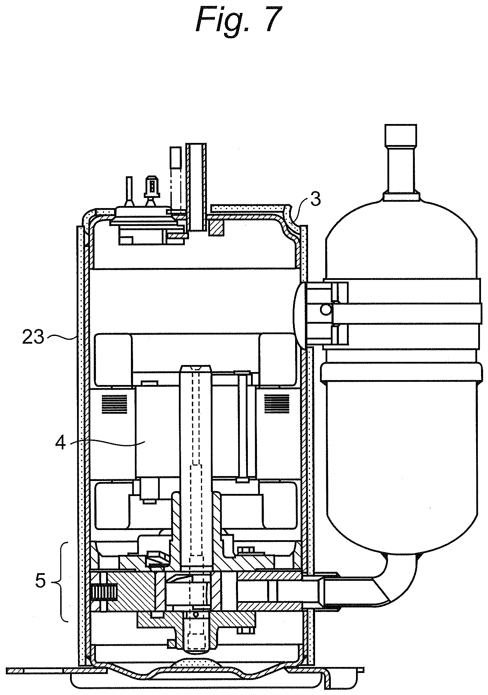

Fig. 7 is a vertical sectional view of a hermetic compressor according to a fourth embodiment of the present invention. As shown in Fig. 7, this hermetic compressor 31 includes a closed container 3 covered with a heat-retaining member 23. By this construction, the heat-retaining member 23 maintains a temperature of the closed container 3 that becomes high during operation, thus making it possible to prevent a reduction in temperature of lubricating oil in the closed container 3 and restrain a refrigerant from blending into the lubricating oil.

The hermetic compressor 31 is provided with an electric heater 20 to heat the lubricating oil. The electric heater 20 can be easily installed and a temperature thereof can be easily controlled, thus making it possible to stabilize the temperature of the lubricating oil.

Also, when a defrosting operation for melting frost adhering to an outdoor heat exchanger 33 is conducted during heating by a refrigerating cycle of an air conditioner 60, an outdoor control device 50 determines supply power to the heater 20 and positively supplies the heater 20 with electric power corresponding to the supply power (input power) based on power consumption of the hermetic compressor 31 so that total power consumption of the air conditioner 60 may not exceed 2000W (may be less than 2000W), i.e., the maximum allowable power consumption during the defrosting operation. The power consumption of the hermetic compressor 31 is obtained from an output value of an operating current sensor 43 for detecting an operating current of the hermetic compressor 31.

As a result, the defrosting operation can be completed within a short period of time, thus making it possible to reduce a reduction in room temperature, which is caused by a reduction in heating performance during defrosting, and enhance comfort.

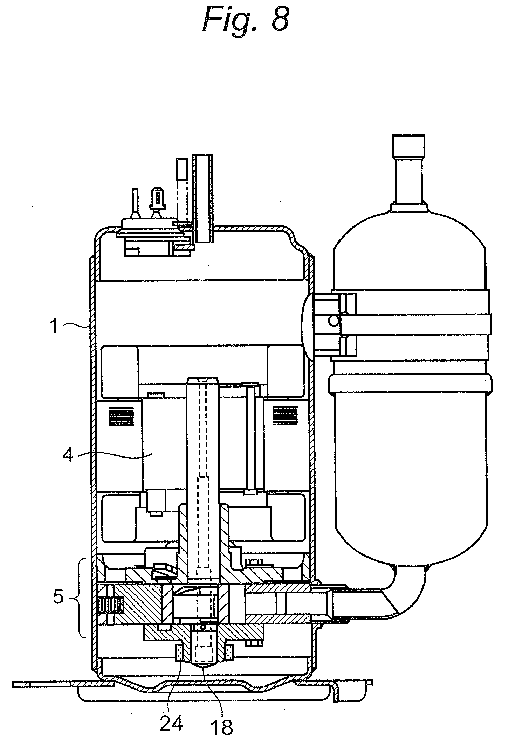

Further, as shown in Fig. 8, even if an induction-heating coil 24 is used as a heat source in place of the heater 20 and supplied with a high-frequency alternating current from an electric current supply circuit of an inverter circuit for heating, similar effects are produced.

Although the power consumption of the hermetic compressor 31 is determined from the output value of the operating current sensor 43 for detecting the operating current of the hermetic compressor 31, the power consumption of the hermetic compressor 31 can be estimated from an output frequency of the inverter circuit for driving the hermetic compressor 31 to determine the supply power to the heater 20.

It is preferred that a single-component refrigerant mainly comprising hydrofluoroolefin having a carbon-carbon double bond or a mixture refrigerant containing this refrigerant be used as a fluid.

Even if a refrigerant mainly comprising hydrofluoroolefin having a carbon-carbon double bond and mixed with hydrofluorocarbon having no double bonds is used as a fluid, the temperature of the lubricating oil can be maintained, thus making it possible to ensure the reliability.

Also, a mixture refrigerant comprising tetrafluoropropene (HFO1234yf or HFO1234ze) or trifluoropropene (HFO1243zf) as a hydrofluoroolefin and difluoromethane (HFC32) as a hydrofluorocarbon may be used as a fluid. The use of such a refrigerant can maintain the temperature of the lubricating oil with a controlled speed thereof, thus making it possible to achieve a good balance between a high efficiency and the reliability.

Further, a mixture refrigerant comprising tetrafluoropropene (HFO1234yf or HFO1234ze) or trifluoropropene (HFO1243zf) as a hydrofluoroolefin and pentafluoroethane (HFC125) as a hydrofluorocarbon may be used as a fluid. The use of such a refrigerant can stabilize the temperature of the lubricating oil while controlling a discharge temperature low, thus making it possible to achieve a good balance between the high efficiency and the reliability.

In each case, the use of the mixture refrigerants are preferable in which two or three components are mixed so as to make the global warming potential greater than or equal to 5 and less than or equal to 750, preferably less than or equal to 350.

As a refrigerant oil for use with the above-described refrigerants, the use of a synthetic oil mainly comprising an oxygenated compound such as, for example, polyoxyalkylene glycols, polyvinyl ethers, copolymers of poly(oxy)alkylene glycol or mono ether thereof and polyvinyl ether, polyol esthers, and polycarbonates is preferred. The use of a synthetic oil mainly comprising one of alkyl benzenes and alpha olefins is also preferred.

It is to be noted that although the above-described embodiments have been explained taking a rotary compressor, similar effects can be obtained in other forms of compressors such as, for example, scroll compressors or reciprocating compressors.

### Industrial Applicability

As described above, because the hermetic compressor according to the present invention can maintain the viscosity of the lubricating oil to enhance the reliability of the compressor, the hermetic compressor according to the present invention is applicable to, for example, a heat pump cycle employed in air conditioners or water heaters.

### Explanation of reference numerals

- 1: suction port
- 2: discharge port
- 3: closed container
- 4: electric motor
- 4a: stator
- 4b: rotor
- 5: compression mechanism
- 6: crankshaft
- 6a: crankpin
- 7: rolling piston
- 8: cylinder
- 9: upper bearing
- 10: lower bearing
- 11: vane
- 12: spring
- 13: suction chamber
- 14: discharge port
- 15: muffler
- 16: high-pressure chamber
- 17: lubricating oil sump
- 18: oil pump
- 19: oil supply channel
- 20: heater (heat source)
- 21: lubricating oil temperature sensor
- 22: pressure sensor
- 23: heat-retaining member
- 24: induction-heating coil (heat source)
- 31: hermetic compressor
- 32: four-way valve
- 33: outdoor heat exchanger
- 34: pressure-reducing device
- 35: outdoor unit
- 36: indoor heat exchanger
- 37: indoor unit
- 38: liquid refrigerant pipe
- 39: gas refrigerant pipe
- 40: compressor temperature sensor
- 41: outdoor refrigerant temperature sensor
- 42: indoor refrigerant temperature sensor
- 43: operating current sensor
- 50: outdoor control device
- 51: indoor control device
- 52: signal line
- 60: air conditioner

## Claims

1. An air conditioner (60) for use with a single-component refrigerant mainly comprising hydrofluoroolefin having a carbon-carbon double bond or a mixture refrigerant containing this refrigerant as a fluid, the air conditioner (60) comprising:
an hermetic compressor (31), a condenser (33, 36), a pressure-reducing device (34) and an evaporator (33, 36), all connected in series by refrigerant piping to define a refrigerating cycle, the hermetic compressor (31) comprising:
a closed container (3) having a suction port (1) and a discharge port (2) both defined therein;
a compression mechanism (5) operable to compress a refrigerant inhaled through the suction port (1);
a high-pressure chamber (16) operable to communicate the compression mechanism (5) with the discharge port (2);
a lubricating oil sump (17) disposed at a bottom portion of the high-pressure chamber (16);
a lubricating oil supply means (18) operable to supply lubricating oil from the lubricating oil sump (17) to the compression mechanism (5); and
a heat source (20, 24) operable to heat the lubricating oil,
**characterized in that** the air conditioner (60) further comprises a control device (50) operable to control power supply to the heat source (20, 24) and an inverter circuit operable to drive the hermetic compressor (31), wherein the hermetic compressor (31) has a variable speed and the control device (50) controls power supply to the heat source (20, 24) based on power consumption or an electric current of the hermetic compressor (31) or an output frequency of the inverter circuit.

2. The air conditioner (60) according to claim 1, wherein the heat source (20, 24) is mounted on an outer surface of the closed container (3).

3. The air conditioner (60) according to claim 1, wherein the heat source (20, 24) is mounted within the closed container (3).

4. The air conditioner (60) according to any one of claims 1 to 3, wherein the heat source (20, 24) comprises an electric heater (20).

5. The air conditioner (60) according to any one of claims 1 to 3, wherein the heat source (20, 24) comprises an electromagnetic induction-heating device (24).

6. The air conditioner (60) according to any one of claims 1 to 5, further comprising:
a lubricating oil temperature measuring means (21) operable to detect a temperature of the lubricating oil; and
a discharge pressure measuring means (22) operable to detect a pressure of a fluid discharged from the discharge port (2),
wherein power supply to the heat source (20, 24) is controlled based on a detected temperature of the lubricating oil temperature measuring means (21) and a detected pressure of the discharge pressure measuring means (22) thereby controlling a viscosity of the lubricating oil.

7. The air conditioner (60) according to any one of claims 1 to 6, further comprising a heat-retaining means (23) disposed around the hermetic compressor (31) to retain heat of the hermetic compressor (31).

8. The air conditioner (60) according to any one of claims 1 to 7, further comprising a compressor temperature measuring means (40) operable to detect a temperature of the hermetic compressor (31) and a condensation temperature measuring means (41, 42) operable to detect a condensation temperature of the air conditioner (60), wherein if the temperature of the hermetic compressor (31) or that of the lubricating oil is lower than the condensation temperature during operation of the air conditioner (60), the control device (50) controls power supply to the heat source (20, 24).

9. The air conditioner (60) according to any one of claims 1 to 8, further comprising an outdoor unit (35) and an outdoor heat exchanger (35) mounted in the outdoor unit (35), wherein when a defrosting operation for melting frost adhering to the outdoor heat exchanger (33) is conducted during heat-pump heating operation by the refrigerating cycle of the air conditioner (60), the control device (50) controls power supply to the heat source (20, 24).

10. The air conditioner (60) according to any one of claims 1 to 9, wherein a refrigerant mainly comprising hydrofluoroolefin having a carbon-carbon double bond and mixed with hydrofluorocarbon having no double bonds is used as a fluid.

11. The air conditioner (60) according to any one of claims 1 to 9, wherein a mixture refrigerant comprising tetrafluoropropene or trifluoropropene as a hydrofluoroolefin and difluoromethane as a hydrofluorocarbon is used as a fluid.

12. The air conditioner (60) according to any one of claims 1 to 9, wherein a mixture refrigerant comprising tetrafluoropropene or trifluoropropene as a hydrofluoroolefin and pentafluoroethane as a hydrofluorocarbon is used as a fluid.

## Patentansprüche

1. Klimaanlage (60) zur Verwendung mit einem Einkomponenten-Kältemittel, das hauptsächlich Hydrofluorolefin mit einer Kohlenstoff-Kohlenstoff-Doppelbindung umfasst, oder einem Mischkältemittel, das dieses Kältemittel als ein Fluid enthält, wobei die Klimaanlage (60) Folgendes umfasst:
einen hermetischen Kompressor (31), einen Verflüssiger (33, 36), eine Vorrichtung zur Druckabsenkung (34) und einen Verdampfer (33, 36), die sämtlich durch Kältemittelrohrleitungen in Reihe verbunden sind, um einen Kühlkreislauf zu definieren, wobei der hermetische Kompressor (31) Folgendes umfasst:
einen geschlossenen Behälter (3) mit einer Ansaugöffnung (1) und einer Auslassöffnung (2), die beide darin definiert sind;
einen Verdichtungsmechanismus (5), der betriebsfähig ist, um ein durch die Ansaugöffnung (1) eingesaugtes Kältemittel zu verdichten;
eine Hochdruckkammer (16), die betriebsfähig ist, um den Verdichtungsmechanismus (5) mit der Auslassöffnung (2) in Verbindung zu setzen;
eine Schmierölwanne (17), die in einem unteren Bereich der Hochdruckkammer (16) angeordnet ist;
eine Schmierölzuführeinrichtung (18), die betriebsfähig ist, um Schmieröl von der Schmierölwanne (17) an den Verdichtungsmechanismus (5) zu liefern; und
eine Wärmequelle (20, 24), die betriebsfähig ist, um das Schmieröl zu erwärmen, **dadurch gekennzeichnet, dass** die Klimaanlage (60) ferner eine Steuervorrichtung (50), die betriebsfähig ist, um eine Zufuhr von Energie zur Wärmequelle (20, 24) zu steuern, und eine Inverterschaltung umfasst, die betriebsfähig ist, um den hermetischen Kompressor (31) anzutreiben, wobei der hermetische Kompressor (31) eine variable Drehzahl hat und die Steuervorrichtung (50) eine Zufuhr von Energie zur Wärmequelle (20, 24) auf der Grundlage einer Leistungsaufnahme oder eines elektrischen Stroms des hermetischen Kompressors (31) oder einer Ausgangsfrequenz der Inverterschaltung steuert.

2. Klimaanlage (60) nach Anspruch 1, wobei die Wärmequelle (20, 24) auf eine Außenfläche des geschlossenen Behälters (3) montiert ist.

3. Klimaanlage (60) nach Anspruch 1, wobei die Wärmequelle (20, 24) in den geschlossenen Behälter (3) eingebaut ist.

4. Klimaanlage (60) nach einem der Ansprüche 1 bis 3, wobei die Wärmequelle (20, 24) einen Elektroerhitzer (20) umfasst.

5. Klimaanlage (60) nach einem der Ansprüche 1 bis 3, wobei die Wärmequelle (20, 24) eine elektromagnetische Induktionsheizvorrichtung (24) umfasst.

6. Klimaanlage (60) nach einem der Ansprüche 1 bis 5, ferner umfassend:
eine Schmieröltemperatur-Messeinrichtung (21), die betriebsfähig ist, um eine Temperatur des Schmieröls zu detektieren; und
eine Auslassdruck-Messeinrichtung (22), die betriebsfähig ist, um einen Druck eines aus der Auslassöffnung (2) ausgestoßenen Fluids zu detektieren,
wobei eine Zufuhr von Energie zur Wärmequelle (20, 24) auf der Grundlage einer detektierten Temperatur der Schmieröltemperatur-Messeinrichtung (21) und eines detektierten Drucks der Auslassdruck-Messeinrichtung (22) gesteuert wird, wodurch eine Viskosität des Schmieröls gesteuert wird.

7. Klimaanlage (60) nach einem der Ansprüche 1 bis 6, ferner umfassend Wärme rückhaltende Mittel (23), die um den hermetischen Kompressor (31) angeordnet sind, um Wärme des hermetischen Kompressors (31) zurückzuhalten.

8. Klimaanlage (60) nach einem der Ansprüche 1 bis 7, ferner umfassend eine Kompressortemperatur-Messeinrichtung (40), die betriebsfähig ist, um eine Temperatur des hermetischen Kompressors (31) zu detektieren, und eine Verflüssigungstemperatur-Messeinrichtung (41, 42), die betriebsfähig ist, um einer Verflüssigungstemperatur der Klimaanlage (60) zu detektieren, wobei die Steuervorrichtung (50) eine Zufuhr von Energie zur Wärmequelle (20, 24) steuert, wenn die Temperatur des hermetischen Kompressors (31) oder die des Schmieröls während des Betriebs der Klimaanlage (60) niedriger als die Verflüssigungstemperatur ist.

9. Klimaanlage (60) nach einem der Ansprüche 1 bis 8, ferner umfassend eine Außeneinheit (35) und einen Außenwärmetauscher (35), der in die Außeneinheit (35) eingebaut ist, wobei die Steuervorrichtung (50) eine Zufuhr von Energie zur Wärmequelle (20, 24) steuert, wenn von dem Kühlkreislauf der Klimaanlage (60) während des Heizbetriebs der Wärmepumpe ein Enteisungsvorgang zum Schmelzen von an dem Außenwärmetauscher (33) haftendem Reif durchgeführt wird.

10. Klimaanlage (60) nach einem der Ansprüche 1 bis 9, wobei ein Kältemittel, das hauptsächlich Hydrofluorolefin mit einer Kohlenstoff-Kohlenstoff-Doppelbindung umfasst und mit Fluorkohlenwasserstoff ohne Doppelbindungen gemischt ist, als ein Fluid verwendet wird.

11. Klimaanlage (60) nach einem der Ansprüche 1 bis 9, wobei ein Mischkältemittel, das Tetrafluorpropen oder Trifluorpropen als ein Hydrofluorolefin und Difluormethan als einen Fluorkohlenwasserstoff umfasst, als ein Fluid verwendet wird.

12. Klimaanlage (60) nach einem der Ansprüche 1 bis 9, wobei ein Mischkältemittel, das Tetrafluorpropen oder Trifluorpropen als ein Hydrofluorolefin und Pentafluorethan als einen Fluorkohlenwasserstoff umfasst, als ein Fluid verwendet wird.

## Revendications

1. Climatiseur (60) destiné à être utilisé avec un réfrigérant à un seul composant comprenant principalement une hydrofluorooléfine ayant une double liaison carbone-carbone ou un réfrigérant de mélange contenant ce réfrigérant sous la forme d'un fluide, le climatiseur (60) comprenant :
un compresseur hermétique (31), un condenseur (33, 36), un dispositif de réduction de pression (34) et un évaporateur (33, 36), tous reliés en série par une tuyauterie de réfrigérant pour définir un cycle de réfrigération, le compresseur hermétique (31) comprenant :
un récipient fermé (3) ayant un orifice d'aspiration (1) et un orifice de refoulement (2) tous deux définis dans celui-ci ;
un mécanisme de compression (5) permettant de comprimer un réfrigérant aspiré à travers l'orifice d'aspiration (1) ;
une chambre haute pression (16) permettant de mettre en communication le mécanisme de compression (5) avec l'orifice de refoulement (2) ;
un carter d'huile de lubrification (17) disposé au niveau d'une partie inférieure de la chambre haute pression (16) ;
un moyen d'alimentation en huile de lubrification (18) permettant de fournir de l'huile de lubrification à partir du carter d'huile de lubrification (17) au mécanisme de compression (5) ; et
une source de chaleur (20, 24) permettant de chauffer l'huile de lubrification,
**caractérisé en ce que** le climatiseur (60) comprend en outre un dispositif de commande (50) permettant de commander l'alimentation électrique de la source de chaleur (20, 24) et un circuit onduleur permettant de entraîner le compresseur hermétique (31), le compresseur hermétique (31) ayant une vitesse variable et le dispositif de commande (50) commandant l'alimentation électrique de la source de chaleur (20, 24) sur la base de la consommation d'énergie ou d'un courant électrique du compresseur hermétique (31) ou d'une fréquence de sortie du circuit onduleur.

2. Climatiseur (60) selon la revendication 1, la source de chaleur (20, 24) étant montée sur une surface extérieure du récipient fermé (3).

3. Climatiseur (60) selon la revendication 1, la source de chaleur (20, 24) étant montée à l'intérieur du récipient fermé (3).

4. Climatiseur (60) selon l'une quelconque des revendications 1 à 3, la source de chaleur (20, 24) comprenant un dispositif de chauffage électrique (20).

5. Climatiseur (60) selon l'une quelconque des revendications 1 à 3, la source de chaleur (20, 24) comprenant un dispositif de chauffage par induction électromagnétique (24).

6. Climatiseur (60) selon l'une quelconque des revendications 1 à 5, comprenant en outre :
un moyen de mesure de température d'huile de lubrification (21) permettant de détecter une température de l'huile de lubrification ; et
un moyen de mesure de pression de refoulement (22) permettant de détecter une pression d'un fluide évacué par l'orifice de refoulement (2),
l'alimentation électrique de la source de chaleur (20, 24) étant commandée sur la base d'une température détectée du moyen de mesure de température d'huile de lubrification (21) et d'une pression détectée du moyen de mesure de pression de refoulement (22) régulant ainsi une viscosité de l'huile de lubrification.

7. Climatiseur (60) selon l'une quelconque des revendications 1 à 6, comprenant en outre un moyen de retenue de chaleur (23) disposé autour du compresseur hermétique (31) pour retenir la chaleur du compresseur hermétique (31).

8. Climatiseur (60) selon l'une quelconque des revendications 1 à 7, comprenant en outre un moyen de mesure de température de compresseur (40) permettant de détecter une température du compresseur hermétique (31) et un moyen de mesure de température de condensation (41, 42) permettant de détecter une température de condensation du climatiseur (60), où, si la température du compresseur hermétique (31) ou celle de l'huile de lubrification est inférieure à la température de condensation pendant le fonctionnement du climatiseur (60), le dispositif de commande (50) commande l'alimentation électrique de la source de chaleur (20, 24).

9. Climatiseur (60) selon l'une quelconque des revendications 1 à 8 comprenant en outre une unité extérieure (35) et un échangeur de chaleur extérieur (35) monté dans l'unité extérieure (35), où, lorsqu'une opération de dégivrage pour faire fondre le givre adhérant à l'échangeur de chaleur extérieur (33) est effectuée pendant une opération de chauffage par pompe à chaleur par le cycle de réfrigération du climatiseur (60), le dispositif de commande (50) commande l'alimentation électrique de la source de chaleur (20, 24).

10. Climatiseur (60) selon l'une quelconque des revendications 1 à 9, un réfrigérant comprenant principalement une hydrofluorooléfine ayant une double liaison carbone-carbone et mélangé avec un hydrofluorocarbure n'ayant pas de doubles liaisons étant utilisé en tant que fluide.

11. Climatiseur (60) selon l'une quelconque des revendications 1 à 9, un réfrigérant de mélange comprenant du tétrafluoropropène ou du trifluoropropène en tant qu'hydrofluorooléfine et du difluorométhane en tant qu'hydrofluorocarbure étant utilisé en tant que fluide.

12. Climatiseur (60) selon l'une quelconque des revendications 1 à 9, un réfrigérant de mélange comprenant du tétrafluoropropène ou du trifluoropropène en tant qu'hydrofluorooléfine et du pentafluoroéthane comme hydrofluorocarbure étant utilisé en tant que fluide.
